# FASCICULE DE BREVET EUROPEEN

(11) **EP 3 524 380 B1**
(45) Date de publication et mention de la délivrance du brevet: **05.08.2020**
(21) Numéro de dépôt: 19156089.5
(22) Date de dépôt: 08.02.2019
(51) Int. Cl.: B23K 11/11, B23K 11/30, B23K 11/31

(54) **PINCE DE SOUDAGE COMPRENANT UN BRAS ROTATIF À USURE LIMITÉE ET À DÉMONTAGE RAPIDE**
SCHWEISSZANGE MIT EINEM DREHARM MIT BEGRENZTEM VERSCHLEISS UND SCHNELLER DEMONTAGE
WELDING GUN COMPRISING A ROTARY ARM WITH LIMITED WEAR AND RAPID DISASSEMBLY

(30) Priorité: 13.02.2018 FR 1870156
(43) Date de publication de la demande: 14.08.2019
(73) Titulaire: FTS Welding, 37300 Joue-les-Tours (FR)
(72) Inventeur: CACHEUX, Philippe, 92120 MONTROUGE (FR)
(74) Mandataire: Gicquel, Frédéric

(56) Documents cités:
- EP-A1- 0 389 260
- WO-A1-01/36141
- WO-A1-2016/162647

## Description

Le domaine de l'invention est celui de la conception et de la fabrication de machines de soudage. Plus précisément, l'invention concerne une pince de soudage conformément au préambule de la revendication 1 (voir par exemple WO 2016/162647 A1), avec notamment un mécanisme d'ouverture et de fermeture de la pince.

Dans le domaine des chaînes de montage et d'assemblage, une pince à souder est un dispositif, généralement monté sur un robot, qui permet de souder par points des pièces, telles que des tôles, sous de très forts courants, de l'ordre de 10 000 à 25 000 A, avec un effort de serrage de l'ordre de 10 kN.

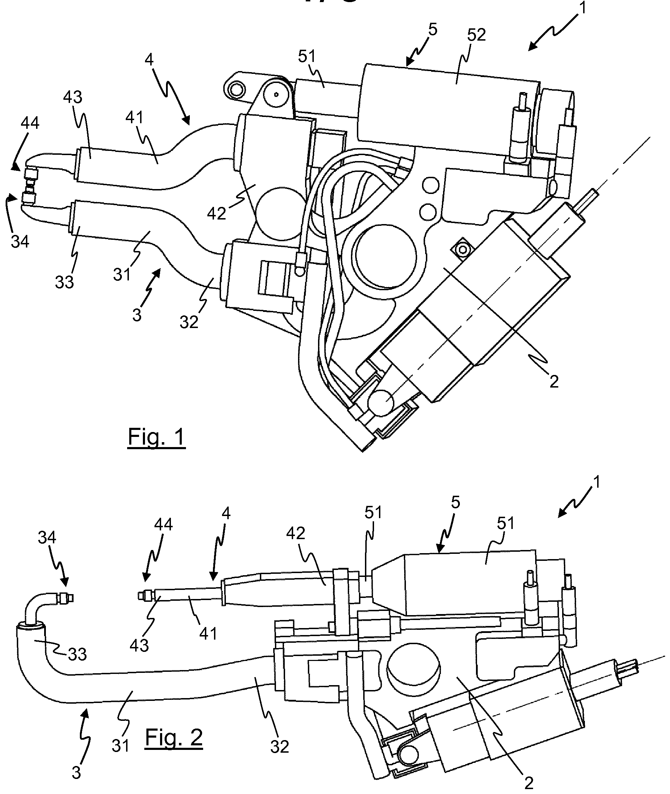

Les figures 1 et 2 illustrent deux pinces selon l'art antérieur.

De manière générale, une pince 1 à souder comporte un bâti 2 sur lequel sont montés deux bras 3, 4 dont chaque extrémité libre est pourvue d'une électrode de soudage 34, 44.

Au moins l'un des bras 3, 4 est mobile entre une première position dans laquelle la pince 1 est en configuration d'accueil et les électrodes 34, 44 sont écartées l'une de l'autre (figure 2), et une deuxième position dans laquelle la pince est en configuration de soudage et les électrodes 34, 44 sont rapprochées l'une de l'autre pour permettre le soudage des deux pièces entre elles (figure 1). Dans l'exemple illustré sur les figures 1 et 2, la pince 1 comprend un bras fixe 3 et un bras mobile 4.

Le soudage est effectué une fois les pièces à souder positionnées entre les deux électrodes, de telle sorte que :
- une force de serrage exercée sur les bras 3, 4 par au moins un vérin 5 qui maintient serrées les pièces l'une contre l'autre, et
- l'émission d'un courant puissant d'une électrode 34, 44 à l'autre. Classiquement, le vérin 5 comprend une tige 51 mobile en translation par rapport à un corps de vérin 52 selon un axe d'extension de la tige. La tige 51 est en outre reliée au bras 4 mobile afin d'entraîner ledit bras 4 mobile en translation (figure 2) ou en rotation (figure 1), pour le faire passer de la position d'accueil à la position de soudage de la pince 1, ou inversement.

Lorsque le bras 4 mobile commandé par le vérin 5 est entraîné en rotation (dans le cas de la pince 1 de la figure 1), le point de liaison entre le bras 4 mobile et la tige 51 de vérin décrit un arc de cercle. Pour assurer sa rotation, le bras 4 mobile est relié au vérin par une bielle 100. La bielle transmet alors l'effort de poussée ou de traction de la tige 51 du vérin au bras 4 mobile.

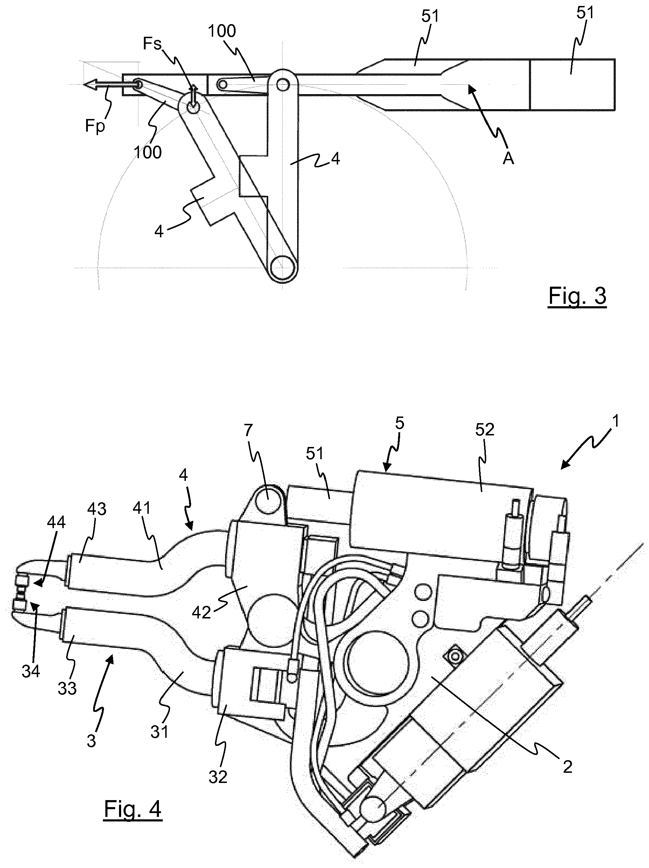

La figure 3 représente de manière schématique les efforts exercés par le vérin sur le second bras via la bielle lorsque la pince est en configuration de soudage et en configuration d'accueil.

Lorsque la pince est en configuration d'accueil, le bras mobile est sensiblement perpendiculaire à l'axe d'extension de la tige et la force exercée par la tige du vérin sur le bras mobile ne comprend quasiment qu'une composante principale Fp parallèle à l'axe d'extension de la tige. En réalité, la force exercée par la tige du vérin sur le bras mobile comprend également une faible composante secondaire Fs perpendiculaire à l'axe d'extension de la tige, cette composante secondaire Fs étant négligeable par rapport à la composante principale Fp à tel point qu'elle est considérée comme nulle ou quasiment et n'est donc pas représentée pour la configuration d'accueil de la pince sur la figure 3.

En revanche, lorsque la pince est en configuration de soudage, le bras mobile forme un angle α aigu avec l'axe d'extension de la tige et la force exercée par la tige du vérin sur le bras mobile comprend une composante principale Fp parallèle à l'axe d'extension de la tige et une composante secondaire Fs perpendiculaire à l'axe d'extension de la tige. Dans la configuration de soudage de la pince, la composante secondaire Fs n'est pas négligeable et engendre un effort mécanique de contrainte sur la tige du vérin.

La composante secondaire Fs engendre en outre un couple de renversement au niveau du système vis/écrou du vérin, c'est-à-dire le mécanisme permettant de transformer un mouvement de rotation issu du moteur en un mouvement de translation effectué par la tige du vérin. Ce couple de renversement nuit à la durée de vie du vérin et peut, à terme, entraîner sa destruction.

Il est donc nécessaire de limiter voire supprimer cet effort secondaire Fs afin de garantir une meilleure durée de vie de la pince de soudage.

L'invention a notamment pour objectif de proposer une pince de soudage dont la durée de vie est accrue par rapport à celles de l'art antérieur.

L'invention a également pour objectif de proposer une pince de soudage dont le passage de la position d'accueil à la position de soudage ou inversement induit une cinématique simple et fiable.

Ces objectifs, ainsi que d'autres qui apparaîtront par la suite, sont atteints grâce à l'invention qui a pour objet une pince de soudage telle que définie dans la revendication 1, comprenant :
- un bâti ;
- un premier bras monté sur le bâti ;
- un second bras monté mobile en rotation sur le bâti ;
- un vérin comprenant une tige mobile en translation par rapport à un corps de vérin selon un axe d'extension de la tige,
la tige du vérin étant reliée au second bras pour entraîner le second bras en rotation, où :
- la tige porte un organe d'entraînement, à une extrémité distale opposée au corps de vérin ;
- le second bras comprend un organe suiveur,
et où l'organe suiveur et l'organe d'entraînement sont couplés par une liaison mécanique autorisant une translation de l'organe suiveur par rapport à l'organe d'entraînement selon une direction perpendiculaire à l'axe d'extension de la tige.

La translation de l'organe suiveur par rapport à l'organe d'entraînement permet de réduire voire supprimer, ou quasiment, la composante perpendiculaire à l'axe d'extension de la tige, au bénéfice de la durée de vie de la pince de soudage.

En effet, la translation de l'organe suiveur permet de conserver le parallélisme entre la première platine et la deuxième platine. Ainsi, la force du vérin, transmise par la première platine, conserve la direction de l'axe d'extension de la tige de sorte que la force appliquée par l'organe suiveur, via la deuxième platine, conserve également une direction parallèle à l'axe d'extension de la tige. Dès lors, la force appliquée sur le second bras conserve la même direction en toute position du second bras.

Selon un mode de réalisation avantageux :
- l'organe d'entraînement est un embout monté à une extrémité distale de la tige et comprenant une première platine sensiblement perpendiculaire à l'axe de la tige, et
- l'organe suiveur est monté pivotant sur le second bras et présente une deuxième platine orientée en regard de la première platine de l'organe d'entraînement.

La première platine et la deuxième platine permettent de faciliter la translation de l'organe suiveur par rapport à l'organe d'entraînement, notamment en formant une liaison appui plan entre les deux organes.

De préférence, l'organe suiveur présente, selon une section transversale, la deuxième platine s'étendant entre deux extrémités reliées par un arc de cercle.

Une telle section permet à l'organe suiveur de pouvoir pivoter par rapport au second bras de sorte que la première platine et la deuxième platine soient toujours parallèles l'une à l'autre.

Selon un mode de réalisation préféré, l'organe suiveur est monté dans au moins un palier ménagé dans le second bras, le palier s'étendant selon une direction perpendiculaire à l'axe d'extension de la tige.

Un tel montage et un tel roulement à aiguilles réduisent les frottements, et donc l'usure, entre l'organe suiveur et le second bras, au bénéfice de la durée de vie du second bras et de l'organe suiveur, et donc de la pince de soudage.

Avantageusement, le second bras comprend une chape ayant deux parois parallèles pourvues chacune d'un palier, chaque palier intégrant un roulement à aiguilles.

Une telle chape permet d'alléger le second bras tout en assurant une bonne tenue de l'organe suiveur sur le second bras.

Selon un mode de réalisation avantageux, la liaison mécanique comprend une interface de roulement intercalée entre l'organe d'entraînement et l'organe suiveur pour favoriser la translation de l'organe suiveur par rapport à l'organe d'entraînement selon la direction perpendiculaire à l'axe d'extension de la tige.

L'interface de roulement permet notamment de limiter la friction entre l'organe suiveur et l'organe d'entraînement, lors de la translation de l'organe suiveur par rapport à l'organe d'entraînement. L'usure de l'organe suiveur et de l'organe d'entraînement est alors réduite, ce qui contribue à nouveau à augmenter la durée de vie de la pince de soudage.

De préférence, l'interface de roulement est une cage à rouleaux dont les rouleaux sont en contact avec la première platine et la deuxième platine, et sont orientés perpendiculairement à l'axe d'extension de la tige et à la direction de translation de l'organe suiveur par rapport à l'organe d'entraînement.

Une telle orientation des rouleaux ainsi que le contact des rouleaux avec la première platine et la deuxième platine favorisent la translation de l'organe suiveur par rapport à l'organe d'entraînement pour limiter leur usure respective.

Selon un mode de réalisation préféré, la pince comprend des moyens de couplage mécanique de l'interface de roulement avec la tige pour assurer le déplacement de l'interface de roulement lors du déplacement de la tige.

Les moyens de couplage permettent d'assurer le déplacement de l'interface de roulement notamment lors du passage en position d'accueil de la pince, ce qui favorise en outre le déplacement de l'organe suiveur par rapport à l'organe d'entraînement. De plus, les moyens de couplage permettent de maintenir l'interface entre les platines et donc d'assurer la translation entre les deux platines.

Dans une forme de réalisation préférentielle, les moyens de couplage mécanique comprennent au moins deux aimants, un premier aimant présentant une première polarité étant porté par l'interface de roulement, et un deuxième aimant présentant une deuxième polarité, inverse à la première polarité, étant porté par la tige.

L'attraction magnétique obtenue par l'utilisation d'aimants est une alternative efficace aux pièces en mouvements qui sont susceptibles de s'user rapidement.

Par ailleurs, l'utilisation d'aimants permet de maintenir l'attraction de l'interface de roulement sur la tige lors du montage et du démontage de la pince, et plus particulièrement lors de l'accouplement ou du désaccouplement du vérin et du bras.

Avantageusement, l'interface de roulement et la tige portent deux premiers aimants et deux deuxièmes aimants respectivement.

Le dédoublement des aimants permet de renforcer l'attraction magnétique, ce qui favorise le déplacement de l'interface de roulement. En outre, ce dédoublement assure un bon positionnement de l'interface de roulement, notamment une symétrie de l'interface qui limite les frottements et donc l'usure de l'interface de roulement.

Selon une solution avantageuse, l'organe d'entraînement comprend une chambre à l'intérieur de laquelle l'organe suiveur est logé et peut translater selon la direction perpendiculaire à l'axe d'extension de la tige.

Le positionnement de l'organe suiveur dans la chambre assure une bonne transmission des efforts et une du vérin sur le second bras et assure l'entraînement de rotation du second bras tant pour la sortie que pour l'entrée de la tige dans le corps du vérin.

Préférentiellement, la chambre est formée par un crochet comprenant une troisième platine en regard de la première platine et définissant la chambre avec cette dernière, l'organe suiveur étant enchâssé entre la première platine et la troisième platine.

Ainsi, lors du déplacement de la tige vers le corps de vérin, le crochet entraîne l'organe suiveur de sorte que la distance entre l'organe suiveur et l'organe d'entraînement soit maintenue constante.

Par ailleurs, la forme de crochet permet de désaccoupler le vérin et le bras de manière simple et rapide.

Avantageusement, le crochet est rapporté sur l'embout.

Ainsi, il est possible soit de remplacer uniquement le crochet lors des opérations de maintenances, soit de remplacer le crochet par un crochet plus résistant en fonction des conditions d'utilisation de la pince de soudage.

De préférence, le crochet est intercalé entre les deux parois de la chape, et ménage avec celles-ci un jeu de fonctionnement.

Un tel montage assure le maintien de l'organe suiveur dans la chambre.

Selon un mode de réalisation particulier :
- la première platine est définie par deux arbres parallèles l'un à l'autre et perpendiculaires à l'axe d'extension de la tige, et
- l'interface de roulement comprend au moins deux rouleaux à aiguilles chacun solidaire de l'un des arbres et venant en appui contre la deuxième platine de l'organe suiveur.

Une telle architecture conserve les bénéfices des caractéristiques décrites précédemment.

Avantageusement, l'organe suiveur comprend un méplat, et l'organe d'entraînement porte un patin ou un galet coopérant avec le méplat pour guider en translation l'organe suiveur.

La présence de patin ou de galet permet notamment en outre de limiter l'usure par frottement de l'organe suiveur sur le crochet de l'organe d'entraînement. La durée de vie de la pince est ainsi améliorée.

D'autres caractéristiques et avantages de l'invention apparaîtront plus clairement à la lecture de la description suivante de modes de réalisation préférentiels de l'invention, donnés à titre d'exemple illustratif et non limitatif, et des dessins annexés parmi lesquels :
- la figure 1 est une vue schématique d'une pince de soudage selon une première forme de réalisation de l'art antérieur, représentée dans une configuration de soudage ;
- la figure 2 est une vue schématique d'une pince de soudage selon une seconde forme de réalisation de l'art antérieur, représentée dans une configuration d'accueil ;
- la figure 3 est une vue schématique de l'art antérieur montrant la liaison par bielle entre le bras mobile et le vérin et les efforts exercés par le vérin sur le second bras via la bielle,
- la figure 4 est une vue schématique d'une pince de soudage selon l'invention, représentée dans une configuration de soudage
- La figure 5 est une vue en perspective d'un système de pilotage du mouvement d'un bras de pince de soudage selon un premier mode de réalisation de l'invention ;
- la figure 6 est une vue de détail en coupe de dessus du système de pilotage de la figure 5 ;
- la figure 7 est une vue schématique montrant le positionnement d'un organe suiveur et d'un organe d'entraînement du système de pilotage des figures 5 et 6 dans la configuration d'accueil de la pince selon l'invention ;
- la figure 8 est une vue schématique montrant le positionnement d'un organe suiveur et d'un organe d'entraînement du système de pilotage des figures 5 et 6 dans la configuration de soudage de la pince selon l'invention ;
- la figure 9 est une vue schématique en coupe transversale montrant système de pilotage des figures 5 et 6 dans la configuration d'accueil de la pince selon l'invention ;
- la figure 10 est une vue schématique en coupe transversale montrant le système de pilotage des figures 5 et 6 dans la configuration de soudage de la pince selon l'invention ;
- la figure 11 est une vue schématique montrant un deuxième mode de réalisation du système de pilotage de la pince selon l'invention ;
- la figure 12 est une vue schématique montrant un troisième mode de réalisation du système de pilotage de la pince selon l'invention, et
- la figure 13 est une vue schématique montrant un quatrième mode de réalisation du système de pilotage de la pince selon l'invention.

Les références numériques déjà utilisées pour décrire l'art antérieur seront conservées pour les pièces communes avec la pince de soudage selon l'invention.

Tel que représenté sur les figures 1 et 2, une pince 1 de soudage selon l'invention comprend :
- un bâti 2, destiné à être porté et déplacé par un bras manipulateur ;
- un premier bras 3 monté sur le bâti 2 ;
- un second bras 4 monté mobile en rotation sur le bâti 2, et
- un système de pilotage du mouvement du second bras 4.

Le bâti 2 peut se présenter sous la forme d'un châssis apte à être fixé sur un sol ou, comme c'est le cas sur la figure 4, d'une structure 21 simple ou complexe apte à être montée par exemple sur un bras manipulateur (non représenté).

Le premier bras 3 comprend une broche 31 présentant une première extrémité 32 par laquelle le premier bras 3 est relié au bâti 2, et une seconde extrémité 33 opposée qui porte une première électrode 34.

Le premier bras 3 est monté solidaire du bâti 2 par une liaison encastrement de sorte qu'il n'existe aucun mouvement du premier bras 3 par rapport au bâti 2.

Le second bras 4 comprend une broche 41 présentant une première extrémité 42 par laquelle le second bras 4 est relié au bâti 2, et une seconde extrémité 43 opposée qui porte une deuxième électrode 44.

Le second bras 4 comprend également deux paliers 45 formés dans une chape 46. Plus précisément, la chape 46 comprend deux parois 47 parallèles l'une à l'autre présentant chacune un perçage formant un palier 45.

En outre, chaque palier 45 intègre un roulement à aiguilles 451.

Le second bras 4 est monté solidaire du bâti 2 par une liaison pivot de sorte qu'il n'existe qu'un mouvement de rotation du second bras 4 par rapport au bâti 2.

Le système de pilotage du mouvement du second bras 4 comprend :
- un vérin électrique 5 ;
- un organe d'entraînement 6 ;
- un organe suiveur 7, et
- une liaison mécanique 8 couplant l'organe d'entrainement 6 et l'organe suiveur 7.

Le vérin 5 comprend une tige 51 mobile en translation par rapport à un corps de vérin 52 selon un axe A d'extension de la tige 51.

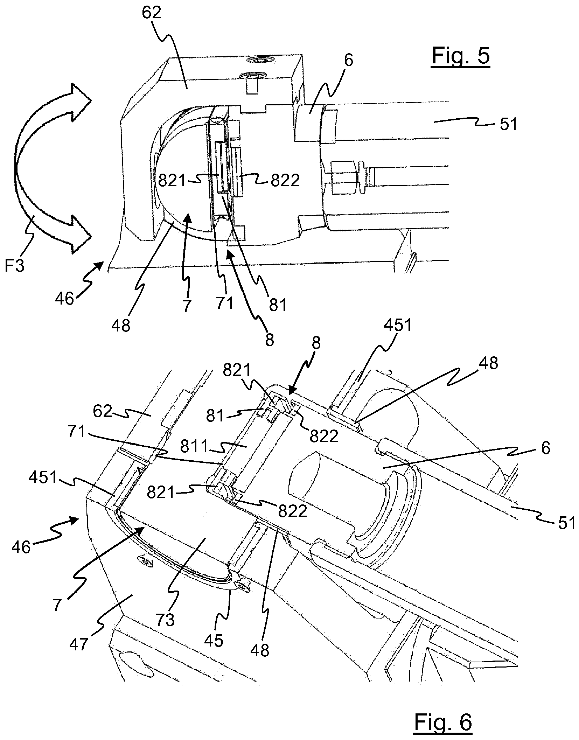

Tel que représenté sur les figures 5 à 10, les paliers 45 cités précédemment s'étendent selon une direction sensiblement perpendiculaire à l'axe d'extension A de la tige 51. En outre, les paliers s'étendent également parallèlement à l'axe d'articulation du second bras, c'est-à-dire à l'axe de pivotement du second bras 4 (cet axe de pivotement n'étant pas représenté sur les figures).

Comme cela est illustré sur les figures 5 à 10, la tige 51 du vérin est reliée au second bras 4 pour entraîner le second bras 4 en rotation par l'intermédiaire de :
- l'organe d'entraînement 6 qui est solidaire de la tige 51 du vérin 5, et
- de l'organe suiveur 7 est solidaire du second bras 4.

L'organe d'entraînement 6 comprend un embout monté à une extrémité distale de la tige 51, opposée au corps de vérin 52.

L'organe d'entraînement 6, et plus précisément l'embout, comprend une première platine 61 sensiblement perpendiculaire à l'axe A d'extension de la tige 51.

En outre, l'organe d'entraînement 6 comprend un crochet 62, rapporté sur l'embout, par exemple par vissage ou collage, et présente une troisième platine 63 qui est logée entre les deux parois 47 de la chape 46 et ménage avec celles-ci un jeu comblé par des rondelles 48 qui limitent la rotation de la tige 51 du vérin 5 dans et notamment du crochet 62 dans la chape 46, entre les deux parois 47. Les rondelles 48 sont par exemple en bronze, et offrent une bonne résistance à l'usure, notamment aux efforts de compression exercés par le crochet 62.

La troisième platine 63 est montée en regard de la première platine 61 et ménage avec cette dernière, une chambre 64 dans laquelle est reçu l'organe suiveur 7. L'organe suiveur est ainsi enchâssé entre la première platine 61 et la troisième platine 63.

L'organe suiveur 7 est monté pivotant sur le second bras 4 et présente une deuxième platine 71 orientée en regard de la première platine 61 de l'organe d'entraînement 6.

Le pivotement de l'organe suiveur 7 par rapport au second bras 4, et donc la liaison pivot entre eux, est notamment obtenue par le montage de l'organe suiveur 7 dans les roulements à aiguilles 451 des paliers 45.

Dans une portion centrale, l'organe suiveur 7 présente, selon une section transversale, la deuxième platine 71 s'étendant entre deux extrémités reliées par un arc de cercle 72.

De chaque côté de la portion centrale, l'organe suiveur 7 comprend un cylindre 73 par lesquels l'organe suiveur 7 est monté en rotation sur le second bras 4.

Ainsi, la deuxième platine 71 de l'organe suiveur 7 forme un cavalier avec les deux cylindres 73.

Les deux cylindres 73 sont reçus dans les roulements à aiguilles 451 du second bras 4 de sorte à favoriser la rotation de l'organe suiveur 7 dans les paliers 45 du second bras 4.

En variante non illustrée, l'organe suiveur 7 pourrait ne comprendre que la portion centrale, c'est avoir une forme semi-cylindrique en section transversale.

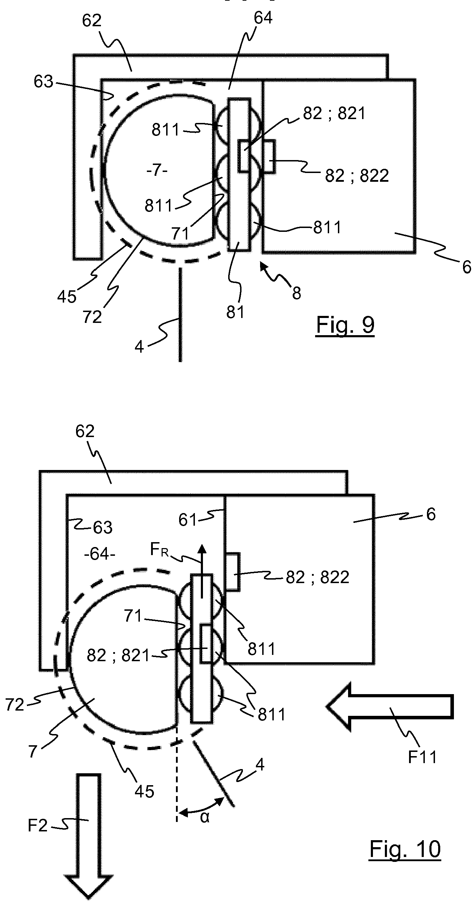

Dans une section transversale, tel qu'illustré sur les figures 9 et 10, lorsque l'organe suiveur 7 est reçu dans la chambre 64, l'arc de cercle 72 est en contact glissant avec la troisième platine 63 et la deuxième platine 71 est en regard de la première platine 61.

La liaison mécanique 8 autorise une translation de l'organe suiveur 7 par rapport à l'organe d'entraînement 6 selon une direction perpendiculaire à l'axe d'extension A de la tige 51.

Pour cela, la liaison mécanique 8 comprend une interface de roulement 81 intercalée entre l'organe d'entraînement 6 et l'organe suiveur 7 pour favoriser la translation de l'organe suiveur 7 par rapport à l'organe d'entraînement 8 selon la direction perpendiculaire à l'axe d'extension A de la tige 51, comme détaillé ci-après.

L'interface de roulement 81 est une cage à rouleaux dont les rouleaux 811 sont en contact avec la première platine 61 et la deuxième platine 71, et sont orientés perpendiculairement à l'axe d'extension A de la tige 51 et à la direction de translation de l'organe suiveur 7 par rapport à l'organe d'entraînement 6.

La cage à rouleaux est avantageusement conçue de sorte que les rouleaux 811 soient toujours perpendiculaires à l'axe d'extension A de la tige 51.

La liaison mécanique 8 comprend également des moyens de couplage mécanique 82 de l'interface de roulement 81 avec la tige 51 pour assurer le déplacement de l'interface de roulement 81 lors du déplacement de la tige 51.

Les moyens de couplage mécanique 82 comprennent au moins deux aimants 821, 822. Un premier aimant 821 présentant une première polarité est porté par l'interface de roulement 81, et un deuxième aimant 822 présentant une deuxième polarité, inverse à la première polarité, est porté par la tige 51.

Plus précisément, le deuxième aimant 822 est porté par l'embout, lui-même monté solidaire de la tige 51.

Les deux aimants 821, 822 créent entre eux un champ magnétique tendant à attirer les deux aimants 821, 822 l'un vers l'autre. Un tel champ magnétique tend à créer une force de rappel en position initiale de l'interface de roulement 81, cette force de rappel étant opposée au sens de déplacement de l'interface de roulement 81. Le champ magnétique forme ainsi un ressort magnétique, untel ressort magnétique étant d'usure limitée ce qui favorise la durée de vie de la pince 1.

Tel que représenté à la figure 6, l'interface de roulement 81 et la tige 51 portent deux premiers aimants 821 et deux deuxièmes aimants 822 respectivement.

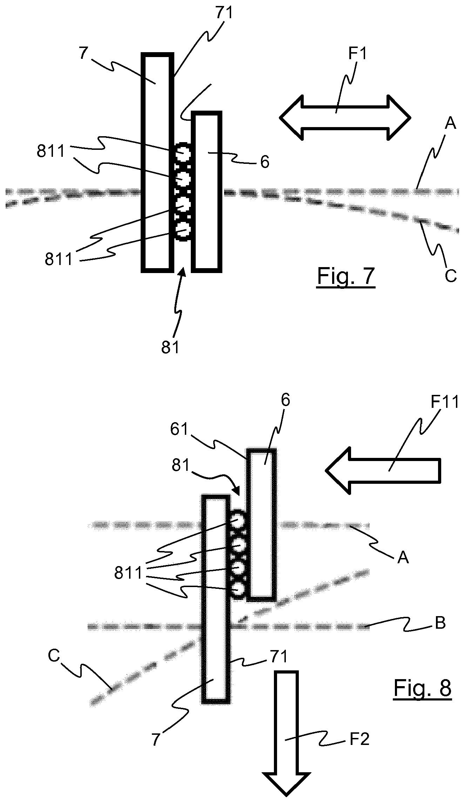

En fonctionnement, tel que représenté sur les figures 7, 8 et 10, la tige 51 se déplace selon un mouvement de translation (représenté par la double flèche F1) suivant l'axe A d'extension de la tige 51.

Pour assurer le soudage de deux pièces ensemble, la pince peut adopter une première configuration d'accueil, dans laquelle les électrodes 34, 44 sont écartées l'une de l'autre, et une deuxième configuration de soudage dans laquelle les électrodes 34, 44 sont à proximité l'une de l'autre pour serrer les deux pièces entre elles.

Lorsque la tige 51 s'écarte du corps de vérin 52 (déplacement représenté par la flèche F11 sur la figure 10), pour faire passer la pince 1 de sa configuration d'accueil à sa configuration de soudage, la force exercée par le vérin sur le second bras 4 est parallèle à l'axe A d'extension de la tige 51.

Le déplacement de la tige 51 entraîne alors la rotation du second bras 4 par l'intermédiaire de l'organe suiveur 7 et de la liaison mécanique 8.

Plus précisément, l'effort du vérin 5 est transmis par la première platine 61 de l'organe d'entraînement 6 qui s'appuie sur les rouleaux 811 de l'interface de roulement 81, les rouleaux s'appuyant à leur tour sur la deuxième platine 71 de l'organe suiveur 7.

L'organe suiveur 7 entraîne alors le second bras 4 en rotation par rapport au bâti 2, selon une trajectoire circulaire C, représentée sur les figures 7 et 8.

Durant la rotation du second bras 4 :
- l'organe suiveur 7 pivote par rapport au second bras 4, dans les paliers 45, de sorte que la première platine 61 et la deuxième platine 71 restent parallèles l'une à l'autre, et
- l'organe suiveur 7 translate par rapport à l'organe d'entraînement 6 selon une direction perpendiculaire à l'axe A de la tige 51, la translation étant illustrée par la flèche F2 sur la figure 8).

Le pivotement de l'organe suiveur 7 est notamment illustré à la figure 5 par la double flèche F3 et aux figures 9 et 10 par la position de la deuxième platine 71 par rapport au second bras 4, schématiquement illustré par une droite.

Lors de la translation de l'organe suiveur 7 par rapport à l'organe d'entraînement 6, l'interface de roulement 81 translate également le long de la première platine 61 et de la deuxième platine 71 par roulement des rouleaux 811 sur chacune des platines 61, 71.

Le pivotement de l'organe suiveur 7 par rapport au bras 4 et la translation de l'organe suiveur 7 par rapport à l'organe d'entraînement 6 permettent que l'effort exercé sur le bras 4 soit uniquement, ou quasiment uniquement, appliqué selon un axe B sensiblement parallèle à l'axe A d'extension de la tige 51.

Lorsque la tige 51 se déplace en direction du corps de vérin 52, pour faire passer la pince de sa configuration de soudage à sa configuration d'accueil, la troisième platine 63 entraîne l'organe suiveur 7 avec lui de sorte à faire pivoter le second bras 4.

Durant ce pivotement, l'organe suiveur 7 pivote par rapport au second bras 4 et translate selon une direction perpendiculaire à l'axe A d'extension de la tige 51, dans un sens opposé à la flèche F2.

Durant le déplacement de la tige 51 vers le corps de vérin 52, l'attraction magnétique due au champ magnétique entre les aimants 821, 822, fait translater l'interface de roulement 81 pour que les aimants 821, 822 soient alignés le long de l'axe A d'extension de la tige 51.

Lors de la translation de l'interface 81, les rouleaux 811 frottent contre la première platine 61 et la deuxième platine 71, ce qui a pour effet d'accentuer la translation de l'organe suiveur 7 par rapport à l'organe d'entraînement perpendiculairement à l'axe A d'extension de la tige 51.

La pince 1 qui vient d'être décrite permet donc que l'effort appliqué sur le second bras 4 ne conserve qu'une composante, ou quasiment qu'une composante, parallèle à l'axe A d'extension de la tige 51 en toute position du second bras 4.

Ainsi, en dimensionnant de manière appropriée l'organe suiveur 7, l'organe d'entrainement 6, et la chape 46, la durée de vie de la pince 1 de soudage peut être accrue de manière significative par rapport à la technique existante qui utilise une ou plusieurs bielles.

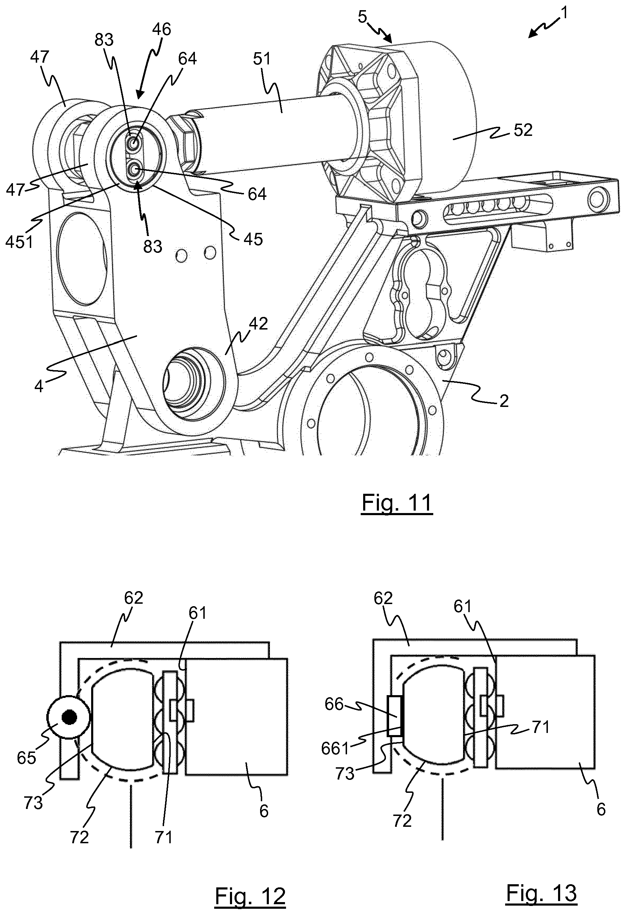

Le deuxième mode de réalisation illustré en figure 11, diffère du premier mode de réalisation des figures 5 à 10 en ce que :
- la première platine 61 est définie par deux arbres 64 parallèles l'un à l'autre et perpendiculaires à l'axe d'extension A de la tige 51, et
- l'interface de roulement 81 comprend au moins deux rouleaux à aiguilles 83 chacun solidaire de l'un des arbres 64 et venant en appui contre la deuxième platine 71 de l'organe suiveur 7.

En fonctionnement, lorsque la tige 51 sort du corps de vérin 52, les roulements à aiguilles 83 appuient sur la deuxième platine 71 pour faire pivoter le second bras 4.

Lorsque le second bras 4 pivote, l'organe suiveur 7 translate le long des roulements à aiguilles 83 selon la direction perpendiculaire à l'axe d'extension A de la tige 51 et pivote dans les paliers 45 de sorte que la deuxième platine 71 soit toujours en appui contre les roulements à aiguilles 83.

Lorsque la tige 51 rentre dans le corps de vérin 52, le crochet 62 entraîne l'organe suiveur 7 par coopération de la troisième platine 63 avec l'arc de cercle 72.

Ce second mode de réalisation permet que l'effort appliqué sur le second bras 4 ne comprenne qu'une faible composante secondaire, perpendiculaire à l'axe A d'extension de la tige 51, cette composante secondaire demeurant minime au regard de l'effort de travail de soudure, c'est-à-dire de l'effort de serrage. A titre indicatif, la composante est inférieure à deux pourcents de la composante principale de l'effort de serrage parallèle à l'axe A de la tige 51.

La pince 1 qui vient d'être décrite permet notamment un montage et un démontage rapide et facile puisque le second bras 4 coopère avec la tige 51 du vérin 5 par l'intermédiaire du crochet 62 qui enchâsse l'organe suiveur 7 solidaire du second bras 4. En outre, les aimants 821, 822 contribuent également à la rapidité et à la facilité de montage et de démontage de la pince 1 en assurant un maintien en position de l'élément de roulement 81 sur la tige 51 du vérin 5.

De plus, la pince 1 est d'utilisation simplifiée puisque les aimants 821, 822 génèrent une force de rappel Fr (visible en figure 10) qui rappelle l'interface de roulement 81 dans sa position initiale.

Dans les troisième et quatrième modes de réalisation, l'organe suiveur 7 comporte un méplat 73, situé sur l'arc de cercle 72, et parallèle à la deuxième platine 71.

Dans le troisième mode de réalisation, illustré en figure 12, le crochet 62 de l'organe d'entraînement 6 porte un galet 65 monté à rotation autour d'un axe perpendiculaire à l'axe A d'extension de la tige 51 du vérin 5. Le galet 65 vient en appui sur le méplat 73 pour guider le mouvement de translation de l'organe suiveur 7.

Dans le quatrième mode de réalisation, illustré en figure 13, le crochet 62 de l'organe d'entraînement 6 porte un patin 66 présentant une surface plane 661 venant en appui sur le méplat 73 pour guider le mouvement de translation de l'organe suiveur 7.

Le galet 65 et le patin 66 permettent de davantage limiter l'usure de l'organe suiveur 7, et donc du système de pilotage de la pince 1. En effet, lors de son déplacement, l'organe suiveur 7 glissera sur le galet 65 ou sur la surface plane 661 du patin 66, ce qui aura pour effet de limiter les frottements entre l'organe suiveur 7 et le crochet 62.

Par ailleurs, le patin 66 peut être une pièce d'usure, réalisée dans un matériau assurant une lubrification entre le patin 66 et l'organe suiveur 7, de sorte à limiter le frottement de l'organe suiveur 7 sur le patin 66.

## Revendications

1. Pince de soudage (1) comprenant :
- un bâti (2) ;
- un premier bras (3) monté sur le bâti (2) ;
- un second bras (4) monté mobile en rotation sur le bâti (2) ;
- un vérin (5) comprenant une tige (51) mobile en translation par rapport à un corps de vérin (52) selon un axe d'extension (A) de la tige (51),
la tige (51) du vérin (5) étant reliée au second bras (4) pour entraîner le second bras (4) en rotation,
**caractérisée en ce que** :
- la tige (51) porte un organe d'entraînement (6), à une extrémité distale opposée au corps de vérin (52) ;
- le second bras (4) comprend un organe suiveur (7),
et **en ce que** l'organe suiveur (7) et l'organe d'entraînement (6) sont couplés par une liaison mécanique (8) autorisant une translation de l'organe suiveur (7) par rapport à l'organe d'entraînement (6) selon une direction perpendiculaire à l'axe d'extension (A) de la tige (51).

2. Pince (1) selon la revendication 1, **caractérisée en ce que** :
- l'organe d'entraînement (6) est un embout monté à une extrémité distale de la tige (51) et comprenant une première platine (61) sensiblement perpendiculaire à l'axe (A) de la tige (51), et
- l'organe suiveur (7) est monté pivotant sur le second bras (4) et présente une deuxième platine (71) orientée en regard de la première platine (61) de l'organe d'entraînement (6).

3. Pince (1) selon la revendication 2, **caractérisée en ce que** l'organe suiveur (7) présente, selon une section transversale, la deuxième platine (71) s'étendant entre deux extrémités reliées par un arc de cercle (72).

4. Pince (1) selon la revendication 2 ou 3, **caractérisée en ce que** l'organe suiveur (7) est monté dans au moins un palier (45) ménagé dans le second bras (4), le palier (45) s'étendant selon une direction perpendiculaire à l'axe d'extension (A) de la tige (51).

5. Pince (1) selon la revendication 4, **caractérisée en ce que** le second bras (4) comprend une chape (46) ayant deux parois (47) parallèles pourvues chacune d'un palier (45), chaque palier (45) intégrant un roulement à aiguilles (451).

6. Pince (1) selon l'une quelconque des revendications précédentes, **caractérisée en ce que** la liaison mécanique (8) comprend une interface de roulement (81) intercalée entre l'organe d'entraînement (6) et l'organe suiveur (7) pour favoriser la translation de l'organe suiveur (7) par rapport à l'organe d'entraînement (6) selon la direction perpendiculaire à l'axe d'extension (A) de la tige (51).

7. Pince (1) selon la revendication précédente, **caractérisée en ce que** l'interface de roulement (81) est une cage à rouleaux dont les rouleaux (811) sont en contact avec la première platine (61) et la deuxième platine (71), et sont orientés perpendiculairement à l'axe d'extension (A) de la tige (51) et à la direction de translation de l'organe suiveur (7) par rapport à l'organe d'entraînement (6).

8. Pince (1) selon l'une des revendications 6 ou 7, **caractérisée en ce qu'**elle comprend des moyens de couplage mécanique (8) de l'interface de roulement (81) avec la tige (51) pour assurer le déplacement de l'interface de roulement (81) lors du déplacement de la tige (51).

9. Pince (1) selon la revendication précédente, **caractérisée en ce que** les moyens de couplage mécanique (82) comprennent au moins deux aimants (821, 822), un premier aimant (821) présentant une première polarité étant porté par l'interface de roulement (81), et un deuxième aimant (822) présentant une deuxième polarité, inverse à la première polarité, étant porté par la tige (51).

10. Pince (1) selon la revendication précédente, **caractérisée en ce que** l'interface de roulement (81) et la tige (51) portent deux premiers aimants (821) et deux deuxièmes aimants (822) respectivement.

11. Pince (1) selon l'une quelconque des revendications 4 ou 6, **caractérisée en ce que** l'organe d'entraînement (6) comprend une chambre (64) à l'intérieur de laquelle l'organe suiveur (7) est logé et peut translater selon la direction perpendiculaire à l'axe d'extension (A) de la tige (51).

12. Pince (1) selon la revendication précédente, **caractérisée en ce que** la chambre (64) est formée par un crochet (62) comprenant une troisième platine (63) en regard avec la première platine (61) et définissant la chambre (64) avec cette dernière, l'organe suiveur (7) étant enchâssé entre la première platine (61) et la troisième platine (63).

13. Pince (1) selon la revendication 12, **caractérisée en ce que** le crochet (62) est intercalé entre les deux parois (47) de la chape (46), et ménage avec celles-ci un jeu de fonctionnement.

14. Pince (1) selon les revendications 6 et 2, **caractérisée en ce que** :
- la première platine (61) est définie par deux arbres (64) parallèles l'un à l'autre et perpendiculaires à l'axe d'extension (A) de la tige (51), et
- l'interface de roulement (81) comprend au moins deux rouleaux à aiguilles (83) chacun solidaire de l'un des arbres (64) et venant en appui contre la deuxième platine (71) de l'organe suiveur (7).

15. Pince (1) selon l'une quelconque des revendications précédentes, **caractérisée en ce que** l'organe suiveur (7) comprend un méplat (73), et l'organe d'entraînement (6) porte un patin (66) ou un galet (65) coopérant avec le méplat (73) pour guider en translation l'organe suiveur (7).

## Patentansprüche

1. Schweißzange (1), umfassend:
- ein Gestell (2);
- einen ersten Arm (3), der am Gestell (2) montiert ist;
- einen zweiten Arm (4), der drehbeweglich am Gestell (2) montiert ist;
- einen Zylinder (5), der eine Stange (51) umfasst, die in Bezug auf einen Zylinderkörper (52) entlang einer Erstreckungsachse (A) der Stange (51) verschiebebeweglich ist,
wobei die Stange (51) des Zylinders (5) mit dem zweiten Arm (4) verbunden ist, um den zweiten Arm (4) drehend anzutreiben,
**dadurch gekennzeichnet, dass**:
- die Stange (51) an einem dem Zylinderkörper (52) gegenüberliegenden distalen Ende ein Antriebsglied (6) trägt;
- der zweite Arm (4) ein Folgerglied (7) umfasst,
und dadurch, dass das Folgerglied (7) und das Antriebsglied (6) über eine mechanische Verbindung (8) gekoppelt sind, die eine Verschiebung des Folgerglieds (7) in Bezug auf das Antriebsglied (6) entlang einer Richtung senkrecht zur Erstreckungsachse (A) der Stange (51) gestattet.

2. Zange (1) nach Anspruch 1, **dadurch gekennzeichnet, dass**:
- es sich beim Antriebglied (6) um ein Endstück handelt, das an einem distalen Ende der Stange (51) montiert ist und eine erste Platte (61) umfasst, die im Wesentlichen senkrecht zur Achse (A) der Stange (51) ist, und
- das Folgerglied (7) schwenkbar am zweiten Arm (4) montiert ist und eine zweite Platte (71) aufweist, die der ersten Platte (61) des Antriebsglieds (6) zugewandt ausgerichtet ist.

3. Zange (1) nach Anspruch 2, **dadurch gekennzeichnet, dass** das Folgerglied (7), entlang einem Querschnitt, die zweite Platte (71) aufweist, die sich zwischen zwei Enden erstreckt, welche über einen Kreisbogen (72) verbunden sind.

4. Zange (1) nach Anspruch 2 oder 3, **dadurch gekennzeichnet, dass** das Folgerglied (7) in mindestens einem Lager (45) montiert ist, das im zweiten Arm (4) ausgebildet ist, wobei sich das Lager (45) entlang einer Richtung senkrecht zur Erstreckungsachse (A) der Stange (51) erstreckt.

5. Zange (1) nach Anspruch 4, **dadurch gekennzeichnet, dass** der zweite Arm (4) eine Abdeckung (46) mit zwei parallelen Wänden (47) umfasst, die jede mit einem Lager (45) versehen sind, wobei jedes Lager (45) ein Nadellager (451) beinhaltet.

6. Zange (1) nach einem der vorstehenden Ansprüche, **dadurch gekennzeichnet, dass** die mechanische Verbindung (8) eine Wälzschnittstelle (81) umfasst, die zwischen dem Antriebsglied (6) und dem Folgerglied (7) eingefügt ist, um die Verschiebung des Folgerglieds (7) in Bezug auf das Antriebsglied (6) entlang der Richtung senkrecht zur Erstreckungsachse (A) der Stange (51) zu begünstigen.

7. Zange (1) nach dem vorstehenden Anspruch, **dadurch gekennzeichnet, dass** es sich bei der Wälzschnittstelle (81) um einen Rollenkäfig handelt, dessen Rollen (811) sich mit der ersten Platte (61) und der zweiten Platte (71) in Kontakt befinden und senkrecht zur Erstreckungsachse (A) der Stange (51) und zur Verschieberichtung des Folgerglieds (7) in Bezug auf das Antriebsglied (6) ausgerichtet sind.

8. Zange (1) nach einem der Ansprüche 6 oder 7, **dadurch gekennzeichnet, dass** sie Mittel zur mechanischen Kopplung (8) der Wälzschnittstelle (81) mit der Stange (51) umfasst, um die Verlagerung der Wälzschnittstelle (81) bei der Verlagerung der Stange (51) sicherzustellen.

9. Zange (1) nach dem vorstehenden Anspruch, **dadurch gekennzeichnet, dass** die Mittel zur mechanischen Kopplung (82) mindestens zwei Magneten (821, 822) umfassen, wobei ein erster Magnet (821), der eine erste Polung aufweist, von der Wälzschnittstelle (81) getragen wird, und ein zweiter Magnet (822), der eine zur ersten Polung entgegengesetzte zweite Polung aufweist, von der Stange (51) getragen wird.

10. Zange (1) nach dem vorstehenden Anspruch, **dadurch gekennzeichnet, dass** die Wälzschnittstelle (81) und die Stange (51) jeweils zwei erste Magneten (821) und zwei zweite Magneten (822) tragen.

11. Zange (1) nach einem der Ansprüche 4 oder 6, **dadurch gekennzeichnet, dass** das Antriebsglied (6) eine Kammer (64) umfasst, in deren Inneren das Folgerglied (7) untergebracht ist und sich entlang der Richtung senkrecht zur Erstreckungsachse (A) der Stange (51) verschieben kann.

12. Zange (1) nach dem vorstehenden Anspruch, **dadurch gekennzeichnet, dass** die Kammer (64) von einem Haken (62) gebildet wird, der eine dritte Platte (63) umfasst, die der ersten Platte (61) zugewandt ist und mit dieser letzteren die Kammer (64) definiert, wobei das Folgerglied (7) zwischen der ersten Platte (61) und der dritten Platte (63) eingebettet ist.

13. Zange (1) nach Anspruch 12, **dadurch gekennzeichnet, dass** der Haken (62) zwischen den zwei Wänden (47) der Abdeckung (46) eingefügt und mit denselben ein Spiel ausbildet.

14. Zange (1) nach den Ansprüchen 6 und 2, **dadurch gekennzeichnet, dass**:
- die erste Platte (61) von zwei zueinander parallelen und zur Erstreckungsachse (A) der Stange (51) senkrechten Wellen (64) definiert wird, und
- die Wälzschnittstelle (81) mindestens zwei Nadellager (83) umfasst, die jedes fest mit einer der Wellen (64) verbunden sind und an der zweiten Platte (71) des Folgerglieds (7) in Anlage gehen.

15. Zange (1) nach einem der vorstehenden Ansprüche, **dadurch gekennzeichnet, dass** das Folgerglied (7) eine Abflachung (73) umfasst, und das Antriebsglied (6) einen Schuh (66) oder eine Rolle (65) trägt, die mit der Abflachung (73) zusammenwirkt, um das Folgerglied (7) verschiebbar zu führen.

## Claims

1. Welding gun (1) comprising:
- a frame (2);
- a first arm (3) mounted on the frame (2);
- a second arm (4) rotatably mounted on the frame (2);
- a cylinder (5) comprising a rod (51) mobile in translation with respect to a cylinder body (52) along an axis of extension (A) of the rod (51),
the rod (51) of the cylinder (5) being connected to the second arm (4) to drive the second arm (4) in rotation,
**characterised in that**:
- the rod (51) carries a driving member (6), at a distal end opposite the cylinder body (52);
- the second arm (4) comprises a follower member (7),
and **in that** the follower member (7) and the driving member (6) are coupled by a mechanical connection (8) that authorises a translation of the follower member (7) with respect to the driving member (6) along a direction perpendicular to the axis of extension (A) of the rod (51) .

2. Gun (1) according to claim 1, **characterised in that**:
- the driving member (6) is an end-piece mounted at a distal end of the rod (51) and comprising a first plate (61) substantially perpendicular to the axis (A) of the rod (51), and
- the follower member (7) is pivotably mounted on the second arm (4) and has a second plate (71) oriented facing the first plate (61) of the driving member (6).

3. Gun (1) according to claim 2, **characterised in that** the follower member (7) has, along a cross-section, the second plate (71) extending between two ends connected by an arc of a circle (72).

4. Gun (1) according to claim 2 or 3, **characterised in that** the follower member (7) is mounted in at least one bearing (45) arranged in the second arm (4), the bearing (45) extending along a direction perpendicular to the axis of extension (A) of the rod (51).

5. Gun (1) according to claim 4, **characterised in that** the second arm (4) comprises a clevis (46) that has two parallel walls (47) each provided with a bearing (45), each bearing (45) integrating a needle bearing (451).

6. Gun (1) according to any preceding claim, **characterised in that** the mechanical connection (8) comprises a bearing interface (81) inserted between the driving member (6) and the follower member (7) to favour the translation of the follower member (7) with respect to the driving member (6) along the direction perpendicular to the axis of extension (A) of the rod (51) .

7. Gun (1) according to the preceding claim, **characterised in that** the bearing interface (81) is a roller and cage assembly of which the rollers (811) are in contact with the first plate (61) and the second plate (71), and are oriented perpendicularly to the axis of extension (A) of the rod (51) and to the direction of translation of the follower member (7) with respect to the driving member (6).

8. Gun (1) according to one of claims 6 or 7, **characterised in that** it comprises means for mechanically coupling (8) the bearing interface (81) with the rod (51) in order to provide the displacement of the bearing interface (81) during the displacement of the rod (51).

9. Gun (1) according to the preceding claim, **characterised in that** the mechanical coupling means (82) comprise at least two magnets (821, 822), a first magnet (821) having a first polarity being carried by the bearing interface (81), and a second magnet (822) having a second polarity, opposite the first polarity, being carried by the rod (51).

10. Gun (1) according to the preceding claim, **characterised in that** the bearing interface (81) and the rod (51) carry two first magnets (821) and two second magnets (822) respectively.

11. Gun (1) according to any of claims 4 or 6, **characterised in that** the driving member (6) comprises a chamber (64) inside of which the follower member (7) is housed and can translate along the direction perpendicular to the axis of extension (A) of the rod (51) .

12. Gun (1) according to the preceding claim, **characterised in that** the chamber (64) is formed by a hook (62) comprising a third plate (63) facing with the first plate (61) and defining the chamber (64) with the latter, the follower member (7) being embedded between the first plate (61) and the third plate (63).

13. Gun (1) according to claim 12, **characterised in that** the hook (62) is inserted between the two walls (47) of the clevis (46), and with the latter arranges an operating clearance.

14. Gun (1) according to claims 6 and 2, **characterised in that**:
- the first plate (61) is defined by two shafts (64) parallel to one another and perpendicular to the axis of extension (A) of the rod (51), and
- the bearing interface (81) comprises at least two needle roller bearings (83) each one integral with one of the shafts (64) and bearing against the second plate (71) of the follower member (7).

15. Gun (1) according to any preceding claim, **characterised in that** the follower member (7) comprises a flat spot (73), and the driving member (6) carried a pad (66) or a roller (65) that cooperates with the flat spot (73) to guide the follower member (7) in translation.
